# EUROPEAN PATENT SPECIFICATION

(11) **EP 2 915 695 B1**
(45) Date of publication and mention of the grant of the patent: **24.08.2016**
(21) Application number: 15151758.8
(22) Date of filing: 20.01.2015
(51) Int. Cl.: B60N 2/28, B62B 7/00

(54) **Child's seat assembly**
Kindersitzanordnung
Ensemble de siège pour enfant

(30) Priority: 04.03.2014 ES 201430288 U
(43) Date of publication of application: 09.09.2015
(73) Proprietor: JANE, S.A., 08184 Palau Solità i Plegamans Barcelona (ES)
(72) Inventor: Jané Santamaria, Manuel, 08184 Palau Solità i Plegamans Barcelona (ES)
(74) Representative: Morgades y Manonelles, Juan Antonio

(56) References cited:
- DE-A1- 19 805 331

## Description

### TECHNICAL FIELD OF THE INVENTION

This child's seat assembly with smaller and larger seats that generally has sides and headrest and where the child is secured with straps.

### BACKGROUND OF THE INVENTION

There are many models of child's seats on the market of said characteristics, among which we can include those that are for small children and those for older children.

There are also child's seats that characteristically have mechanisms that enable the sides to be separated, the headrest to be raised, and some even allow the seat to be widened laterally to adapt to the child's growth.

This latter version of a child's seat, although it has the advantage that it can be used in the different stages of growth of a child, presents the disadvantage of a high price due to the presence of these mechanisms, which also complicates the manufacturing of the seat and they do not always work perfectly, nor are they practical for use by people who are not technically minded to handle the controls of said mechanisms.

The German patent no. DE 198 05 331 A1 is cited, whose object is a first infant seat for automobiles which comprises a second seat of smaller size aimed to babies, which fits in the first seat and that it is withdrawn when the baby grows up, using for the seat aimed to babies the very same belts which has installed the first seat.

### SUMMARY OF THE INVENTION

The aim of this invention is to offer a child's seat assembly as claimed in claim 1 that can be used by children of different sizes in a practical manner and without mechanisms, comprising two seats of different dimensions, the smaller one fitting first on top of the larger one, which has straps for securing the child, these straps are used in the smaller seat when it is fitted onto the larger seat, then, when the child has grown, it will be seated on the larger seat after removing the smaller one.

Another special feature of this seat is that is can be manufactured at a low cost and in addition it absorbs pressure or impacts caused, for example, in collisions, for which both seats are entirely made of single moulded elements, made of spongy material with adequate rigidity to absorb energy.

These and other characteristics will be best made apparent by the following detailed description whose understanding will be made easier by the accompanying three sheets of drawings showing a practical embodiment being cited only by way of an example not limiting the scope of the present invention.

### DESCRIPTION OF THE DRAWINGS

In the drawings:
Figure 1 depicts a perspective view of the seat assembly referred to in this invention when used by a small child sitting on the smaller chair,
Figure 2 shows a perspective view of the separation of both seats in the assembly, and
Figure 3 shows a perspective view of the use of the larger for an older child, with the smaller seat removed.

### DETAILED DESCRIPTION OF A PREFERRED EMBODIMENT OF THE INVENTION

As can be seen in the attached drawings, the child's seat assembly comprises two seats of different sizes, one (1) smaller and the other (2) larger.

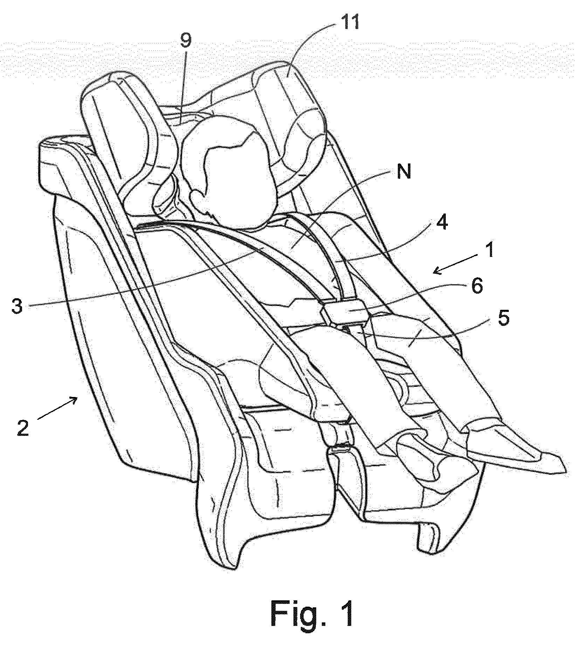

When using this seat initially, namely when the child (N) is very small, the child (N) is seated on the smaller seat (1), which (1) is fitted onto the larger seat (2), as can be seen in Figure 1.

The larger seat (2) has the conventional straps used on this kind of seat, which in this case has three securing points, two for the straps (3 and 4) and one for the crotch strap (5), the other straps (3 and 4) are attached to the crotch strap (5) with a buckle or catch (6).

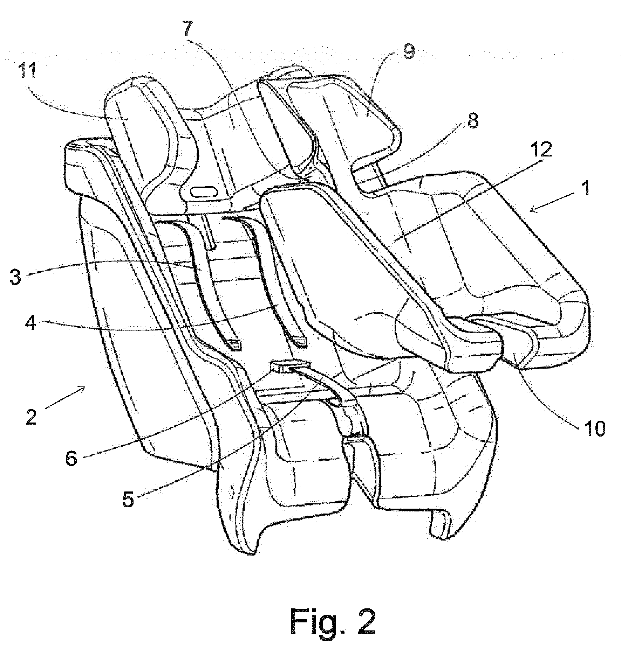

These straps (3, 4 and 5) are also used to secure the child in the smaller seat (1), with the straps (3 and 4) passing through openings (7 and 8) (see figure 2) on the sides of the back (12) and the headrest (9) of the smaller seat (1) and the crotch strap (5) passes through an opening (10) on the lower edge of the seat (1).

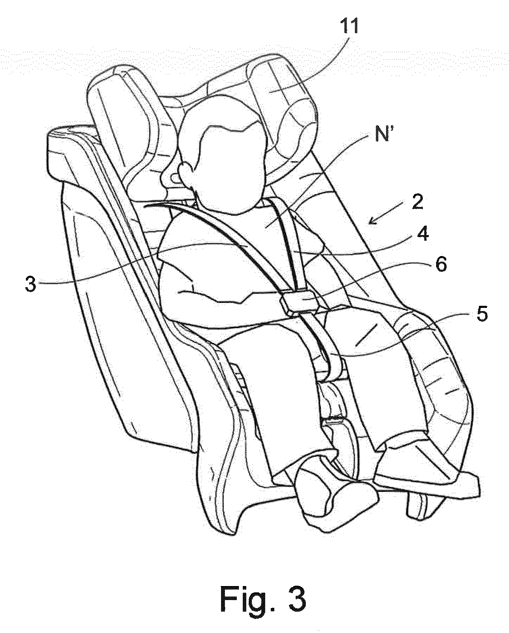

Later, when the child has grown (N'), it (N') can be seated on the larger (see figure 3) seat (2), once the smaller seat (1) has been removed, as can be seen in Figure 2. In this larger seat (2), the headrest (11) is fitted independently, being adjustable in height to adapt to the size of the child when it grows.

Both seats (1) and (2) are made of single moulded pieces of the desired shape and entirely made of spongy and rigid material (e.g. expanded polypropylene or expanded polystyrene) that absorbs pressure and impact in collisions.

These single moulded components will have a surface finish and can be completed with upholstery.

This seat assembly is preferably designed as a safety seat for children when travelling in automobiles; however, it could also be adapted to be used in children's pushchairs.

The invention can within its essentiality be put into practice in other embodiments differing only in detail from the one having been described above only by way of example, said other embodiments also falling within the scope of the claims.

## Claims

1. Child's seat assembly comprising two seats (1 and 2) of different dimensions, each showing two sides, a back and a headrest, the smaller one (1) apt to be fitting first on top of the larger one (2) which has straps (3, 4 and 5) for securing the child, these straps (3, 4 and 5) are used in the smaller seat (1) when it is fitted onto the larger seat (2), then, when the child has grown, it will be seated on the larger seat (2) after removing the smaller one (1), the two seats (1 and 2) consisting of single moulded pieces entirely made of spongy and rigid material, absorbing pressure and impact in collisions, **characterised in that** the smaller seat (1) has two openings (7, 8) laterally on the sides of the back (12) and the headrest (9), between the back (12) and the headrest (9) and one opening (10) on the lower edge, each opening being formed on the edge of the smaller seat (1) as an open recess for the passage of the straps (3, 4 and 5) fitted to the larger seat and in this larger seat (2), the headrest (11) is fitted independently, being adjustable in height to adapt to the size of the child when it grows.

2. Child's seat assembly, according to the claim 1, **characterised in that** the single moulded components have a surface finish and/or upholstery.

## Patentansprüche

1. Kindersitzanordnung bestehend aus zwei Sitzen (1 und 2) unterschiedlicher Größe, die jeweils zwei Seitenteile, ein Rückenteil und eine Kopfstütze aufweisen, wobei der kleinere (1) so ausgelegt ist, dass er auf den größeren (2) passt, der wiederum mit Haltegurten (3, 4 und 5) zur Sicherung des Kindes ausgestattet ist, wobei diese Haltegurte (3, 4 und 5) für den kleineren Sitz (1) verwendet werden, wenn dieser auf dem größeren Sitz (2) befestigt wird; sobald das Kind größer geworden ist, wird es nach Entfernen des kleineren Sitzes (1) auf den größeren Sitz (2) gesetzt, wobei die beiden Sitze (1 und 2) aus einstückig geformten Teilen bestehen, die vollständig aus einem festen schaumartigen Material hergestellt sind, das Druck und Stöße bei Kollisionen auffängt, **dadurch gekennzeichnet, dass** der kleinere Sitz (1) zwei seitliche Öffnungen (7, 8) an den Seiten des Rückenteils (12) und der Kopfstütze (9), zwischen dem Rückenteil und der Kopfstütze, und eine Öffnung (10) am unteren Rand aufweist, wobei jede Öffnung am Rand des kleineren Sitzes (1) als offene Aussparung für das Durchführen der Haltegurte (3, 4 und 5) zur Befestigung am größeren Sitz gestaltet ist und wobei bei diesem größeren Sitz (2) die Kopfstütze (11) separat befestigt wird und höhenverstellbar ist, sodass sie sich der Körpergröße des Kindes im Laufe seines Wachstums anpasst.

2. Kindersitzanordnung nach Anspruch 1, **dadurch gekennzeichnet, dass** die einstückig geformten Teile eine Oberflächenverarbeitung und/oder Polsterung aufweisen.

## Revendications

1. Ensemble de siège pour enfants comprenant deux sièges (1 et 2) de dimensions différentes, chacun présentant deux parties, un dossier et un appui-tête, le plus petit (1) étant apte à être d'abord adapté sur le plus grand (2) qui inclut des sangles (3, 4 et 5) pour attacher l'enfant, ces sangles (3, 4 et 5) sont utilisées dans le siège inférieur (1) lorsqu'il est monté sur le siège le plus grand (2), puis, lorsque l'enfant a grandi, il sera assis sur le siège le plus grand (2) après avoir enlevé le plus petit (1), les deux sièges (1 et 2) étant constitués de pièces individuelles entièrement moulées en matière spongieuse et rigide, absorbant la pression et l'impact en cas de collision, **caractérisé en ce que** le plus petit siège (1) comporte deux ouvertures (7, 8) latéralement sur les côtés du dossier (12) et l'appuie-tête (9) entre le dossier (12) et l'appuie-tête (9) et une ouverture (10) sur le bord inférieur, chaque ouverture étant formée sur le bord du siège inférieur (1), comme un évidement ouvert pour le passage des sangles (3, 4 et 5) montées sur le siège le plus grand et sur ce siège plus large (2), l'appui-tête (11) est monté de façon indépendante, étant réglable en hauteur pour s'adapter à la taille de l'enfant quand il grandit.

2. Ensemble de siège pour enfant, conformément à la revendication 1, **caractérisé en ce que** les composants individuels moulés ont une finition et/ou des garnitures sur la surface.
